# EUROPÄISCHE PATENTSCHRIFT

(11) **EP 4 617 996 B1**
(45) Veröffentlichungstag und Bekanntmachung des Hinweises auf die Patenterteilung: **09.12.2026**
(21) Anmeldenummer: 25159471.9
(22) Anmeldetag: 21.02.2025
(51) Int. Cl.: G06T 3/40, G06T 11/00, G06T 3/4046

(54) **COMPUTERIMPLEMENTIERTES VERFAHREN ZUM AUFBRINGEN EINES BILDES AUF EIN SUBSTRAT**
COMPUTER-IMPLEMENTED METHOD FOR APPLYING AN IMAGE TO A SUBSTRATE
PROCÉDÉ ASSISTÉ PAR ORDINATEUR POUR APPLIQUER UNE IMAGE SUR UN SUBSTRAT

(30) Priorität: 15.03.2024 DE 102024107461
(43) Veröffentlichungstag der Anmeldung: 17.09.2025
(73) Patentinhaber: RiFi IP GmbH, 65205 Wiesbaden (DE)
(72) Erfinder: Karatay, Veli, 65205 Wiesbaden (DE); Karatay, Sinan, 65205 Wiesbaden (DE)
(74) Vertreter: Bernsmann, Falk

(56) Entgegenhaltungen:
- US-A1- 2013 149 509
- US-A1- 2016 242 607
- US-A1- 20230 169 632

## Beschreibung

### Technisches Gebiet

Die Erfindung betrifft ein computerimplementiertes Verfahren zum Aufbringen eines Bildes auf eine Substrat, das Verfahren umfassend folgende Schritte: Auswählen des Bildes, insbesondere aus einer Bilddatenbank; Ermitteln einer Substratbreite und einer Substrathöhe des Substrats; automatisches Anpassen des Bildes, sodass das angepasste Bild das Substrat mindestens vollständig überdeckt; und automatisches Aufbringen des angepassten Bildes auf das Substrat.

### Stand der Technik

Aus dem Stand der Technik sind computerimplementierte Verfahren zum Bedrucken eines Substrats mit einem Bild bekannt, bei denen das Bild automatisch auf die Größe des Substrats skaliert wird. Das kann bei einem hohen Größenunterschied zwischen Substrat und Bild zu einem Verlust der Bildqualität oder der Realitätstreue führen. Außerdem ist es bei mehrteiligen Substraten möglich, dass sich mehrere unterschiedliche Skalierungsfaktoren ergeben, sodass sich die Substratteile nicht zu einem einheitlichen Gesamtbild zusammensetzen lassen.

Die Druckschrift US 2015/0339800 A1 offenbart ein Verfahren, um Bilder an unterschiedlich große und unterschiedlich geformte Kleidungsstücke anzupassen, wobei die Bilder automatisch skaliert und positioniert werden. Die Druckschrift KR 10-2022-0130498 A offenbart ein Verfahren, um Bilder entlang einer Achse mit künstlicher Intelligenz (KI) zu erweitern, um Qualitätsverluste bei einer Vergrößerung der Bilder zu reduzieren. Die Druckschrift US 2023/0169632 A1 offenbart ein Verfahren, um Bilder mit Hilfe von KI entlang von zwei Achsen zu erweitern. Die Druckschrift CN 106897967 A offenbart ein Verfahren, um ein Bild an ein Substrat anzupassen, indem das Bild entlang einer oder beider Achsen gespiegelt aneinandergereiht wird. Die Druckschrift US 2013/0149509 A1 beschreibt ein Verfahren zur Herstellung eines dekorativen Oberflächenbelags, wobei ein Bild manuell bearbeitet werden kann, um das Bild an die Größe des Oberflächenbelags anzupassen, bevor das Bild auf den Oberflächenbelag gedruckt wird.

### Technische Aufgabe

Die Aufgabe der Erfindung ist es, ein vielseitiges Verfahren zu schaffen, mit dem ein Bild verlustfrei und realitätsgetreu auf ein, insbesondere mehrteiliges, Substrat beliebiger Größe aufgebracht werden kann.

### Technische Lösung

Die vorliegende Erfindung stellt ein computerimplementiertes Verfahren gemäß Anspruch 1 bereit, das die technische Aufgabe löst. Ebenso wird die Aufgabe durch ein Computersystem gemäß Anspruch 13 und ein Computerprogramm gemäß Anspruch 14 gelöst. Vorteilhafte Ausgestaltungen sind Gegenstand der abhängigen Ansprüche.

### Beschreibung der Ausführungsarten

Das computerimplementierte Verfahren dient zum Aufbringen eines Bildes auf ein Substrat, insbesondere auf eine Wandverkleidung wie beispielsweise ein Wandbild, eine Tapete, eine Küchenrückwand oder eine Duschrückwand. Das Bild und/oder das Substrat kann eine beliebige, beispielsweise rechteckige, quadratische, dreieckige oder runde, Form haben. Vorzugsweise ist das Bild und/oder das Substrat rechteckig.

Das Verfahren umfasst ein Auswählen des Bildes, insbesondere aus einer Bilddatenbank.

Das Verfahren umfasst ein Ermitteln einer Substratbreite und einer Substrathöhe des Substrats, beispielsweise durch ein Eingeben der Substratbreite und der Substrathöhe.

Das Verfahren umfasst ein automatisches Anpassen des Bildes, sodass das angepasste Bild das Substrat mindestens vollständig überdeckt.

Das Verfahren umfasst ein automatisches Aufbringen, insbesondere Drucken, Gravieren und/oder Lackieren, des angepassten Bildes auf das Substrat.

Das automatische Anpassen umfasst vorzugsweise ein automatisches Erkennen mindestens eines Objekts in dem Bild.

Das automatische Anpassen umfasst vorzugsweise ein automatisches Entscheiden abhängig von Eigenschaften des erkannten Objekts, ob das Objekt vergrößert wird durch ein Skalieren des Objektes, durch ein mehrfaches Anordnen des Objektes aufeinanderfolgend und jeweils an den Kanten aneinandergrenzender Objekte gespiegelt, und/oder durch ein KI-gestütztes Erweitern des Objektes.

Das automatische Anpassen umfasst vorzugsweise ein automatisches Vergrößern des Bildes zumindest auf die Größe des Substrats, wobei das mindestens eine Objekt gemäß dem Ergebnis des Entscheidens vergrößert wird. Das Bild wird also vergrößert, indem das mindestens eine Objekt abhängig von den Eigenschaften des Objekts durch Skalieren, mehrfaches Anordnen und/oder KI-gestütztes Erweitern vergrößert wird.

Durch ein mehrfaches gespiegeltes Anordnen und/oder KI-gestütztes Erweitern kann das Bild zwar verlustfrei vergrößert werden, je nach den in dem Bild enthaltenen Objekten kann jedoch ein unrealistisches Ergebnis entstehen, beispielsweise wenn bei einem Landschaftsbild die Sonne oder ein Schlagschatten oder bei einem Portrait die porträtierte Person mehrfach gespiegelt angeordnet wird. Auch ein Skalieren kann neben Qualitätsverlusten zu einem unrealistischen Ergebnis führen, beispielsweise wenn ein Objekt, z.B. ein Backstein, weit über seine natürliche Größe vergrößert wird.

Die erfindungsgemäße Entscheidung für eine oder mehrere Vergrößerungsmethoden abhängig von einem oder mehreren in dem Bild enthaltenen Objekten wird gemäß der Aufgabe unabhängig von dem gewählten Bild ein Ergebnis mit hoher Bildqualität und Realitätstreue erzielt.

In dem Bild kann genau ein Objekt erkannt werden, sodass mit dem genau einen Objekt das gesamte Bild einheitlich vergrößert wird. In dem Bild können mehrere Objekte erkannt werden, die abhängig von ihren Eigenschaften auf unterschiedliche Weise vergrößert und dann wieder zu dem angepassten Bild zusammengefügt werden können. Auf diese Weise kann vorteilhafterweise auch aus einem Bild, das unterschiedliche Objekte enthält, für die unterschiedliche Methoden der Vergrößerung geeignet sind, ein angepasstes Bild mit einer hohen Bildqualität und Realitätstreue erreicht werden.

Das automatische Erkennen des mindestens eines Objekts in dem Bild umfasst vorzugsweise ein automatisches Erkennen mehrerer Objekte in dem Bild; wobei das automatische Entscheiden, wie die Objekte vergrößert werden, und das automatische Vergrößern der Objekte gemäß dem Ergebnis des Entscheidens für die Objekte voneinander unabhängig erfolgen.

Das automatische Erkennen des mindestens einen Objekts erfolgt vorzugsweise durch maschinelles Sehen, Computer Vision und/oder Deep Learning, wobei das automatische Erkennen bevorzugt mehrere Computational Neural Networks (CNN) verwendet, um Merkmale zur Erkennung des Objekts auf verschiedenen Ebenen einer Bildhierarchie des Bildes zu extrahieren.

Das CNN-Modell ist vorzugsweise darauf trainiert, charakteristische Merkmale von Objekten, beispielsweise Formen, zu extrahieren und sie mit bekannten Norm-Werten zu vergleichen, um eine präzise Klassifizierung des Objekts zu ermöglichen. Wenn ein Objekt mit bestimmten Norm-Werten erkannt wird, wie beispielsweise eine geometrische Form mit einem bestimmten Seitenverhältnis, oder ein bekanntes Standardobjekt wie ein Backstein, entscheidet das Verfahren beispielsweise, ob eine Skalierung angemessen ist oder nicht. Falls beispielsweise die Form eines erkannten Objekts als eine mit Norm-Werten übereinstimmende Form klassifiziert wird, entscheidet das Verfahren beispielsweise, das Objekt KI-gestützt zu erweitern, anstatt es zu skalieren, um die Form realitätstreu anzupassen und so die Integrität und visuelle Harmonie der Form zu bewahren.

Das automatische Anpassen umfasst vorzugsweise ein automatisches Bestimmen eines Kontextes des mindestens einen Objekts, wobei das automatische Entscheiden den Kontext einbezieht. Der Kontext umfasst bevorzugt eine räumliche Beziehung und/oder eine funktionale Bedeutung des mindestens einen Objekts in dem Bild. Das Bestimmen des Kontextes erfolgt bevorzugt durch einen Algorithmus zur Mustererkennung und/oder durch eine semantische Analyse. Die semantische Analyse umfasst vorzugsweise sowohl eine unmittelbare Umgebung des Objekts als auch dessen Position relativ zu anderen Objekten in dem Bild, wodurch das Verfahren in der Lage ist, Rückschlüsse auf die Rolle und Relevanz des Objekts in der Gesamtdarstellung des Bildes zu ziehen.

Das Verfahren bewertet beispielsweise, ob das erkannte Objekt Teil eines größeren kompositorischen Zusammenhangs ist, wie etwa in einer architektonischen Landschaft, einem wiederkehrenden Muster oder einer texturbasierten Struktur. Diese Kontextbewertung erlaubt es dem Verfahren, fundierte Entscheidungen darüber zu treffen, ob das Objekt skaliert, erweitert oder unverändert beibehalten werden sollte, um die visuelle Integrität und ästhetische Kohärenz des gesamten Bildes zu gewährleisten. Insbesondere bei der Anwendung auf komplexe Bildkompositionen trägt diese kontextbasierte Analyse dazu bei, unerwünschte Verzerrungen zu vermeiden, indem sie sicherstellt, dass die Proportionen und relativen Positionen der Objekte im Bild auch nach der Anpassung erhalten bleiben.

Das automatische Entscheiden erfolgt anhand vordefinierter Regeln und/oder durch einen lernfähigen Algorithmus. Für jedes erkannte Objekt wird vorzugsweise eine Reihe von Kriterien, beispielsweise der zuvor beschriebene Vergleich mit Norm-Werten und/oder die zuvor beschriebene Kontextbewertung, angewendet, um festzustellen, ob es skaliert, gespiegelt, erweitert und/oder anderweitig angepasst, beispielsweise retuschiert oder ersetzt, werden sollte. Diese Entscheidung beruht vorzugsweise auf einer umfassenden Analyse der Beziehung zwischen dem erkannten Objekt und dem Gesamtbild, einschließlich seiner Position, Größe, Kontext und/oder anderen visuellen Merkmalen.

Das KI-gestützte Erweitern umfasst vorzugsweise ein Analysieren und Erweitern des Objektes durch ein tiefes neuronales Netzwerk, das bevorzugt Generative Adversarial Networks (GAN) nutzt. Das neuronale Netzwerk ist beispielsweise mit einer großen Menge von Trainingsdaten trainiert, wobei die Trainingsdaten vorzugsweise Informationen enthalten, wie Objekte in verschiedenen Kontexten erweitert werden können, um ein realitätstreues und ästhetisch ansprechendes Ergebnis zu erzielen. Durch die Nutzung von Generative Adversarial Networks und/oder ähnlichen Ansätzen wird das erweiterte Objekt vorzugsweise nahtlos in das angepasste Bild integriert, um eine natürliche und realistische Wirkung zu erzielen. Die Erweiterung des Objekts erfolgt beispielsweise mit Hilfe eines für die Erweiterung ohne Verlust der Realitätstreue trainierten und/oder optimierten neuronalen Netzwerks, das in der Lage ist, das erkannte Objekt künstlich zu erweitern, während es dessen ursprüngliche Form und Struktur beibehält. Durch diese gezielte Erweiterung wird vorteilhafterweise sichergestellt, dass das angepasste Bild in Bezug auf das erkannte Objekt realitätstreu bleibt, ohne die Größenverhältnisse oder die visuelle Ästhetik zu beeinträchtigen.

Das automatische Anpassen umfasst vorzugsweise ein automatisches Feststellen eines Blickwinkels (Point-of-View) des Bildes, wobei das automatische Entscheiden den Blickwinkel einbezieht. Die Blickwinkel-Erkennung basiert vorzugsweise auf fortschrittlichen Techniken des maschinellen Lernens und der Computer Vision. Das Verfahren analysiert beispielsweise Merkmale wie die Perspektive des Bildes, die Position von bekannten Referenzpunkten und/oder andere visuelle Hinweise, um den Blickwinkel des Bildes festzustellen. Das Verfahren bezieht den Blickwinkel vorzugsweise ein, um zu entscheiden, ob und wie das Bild und/oder das mindestens eine darin erkannte Objekt vergrößert werden soll, um eine möglichst realitätstreue Darstellung aus dem festgestellten Blickwinkel zu gewährleisten.

Wenn die Substratbreite kleiner oder gleich einer vordefinierten Maximalbreite ist und die Substrathöhe kleiner oder gleich einer vordefinierten Maximalhöhe ist, kann das automatische Anpassen den folgenden Schritt umfassen: Skalieren des Bildes auf eine Größe, bevorzugt auf die kleinstmögliche Größe, bei der eine skalierte Bildbreite mindestens so groß ist wie die Substratbreite und eine skalierte Bildhöhe mindestens so groß ist wie die Substrathöhe. Wenn das Substrat klein genug ist, wird das Bild also nur durch eine Skalierung so angepasst, dass das gesamte Substrat in das skalierte Bild passt, sodass aus dem skalierten Bild ein Bildausschnitt zum vollständigen Überdecken des Substrats gewählt werden kann.

Die Maximalbreite und/oder die Maximalhöhe sind vorzugsweise so vordefiniert, dass das Bild bis zur Maximalbreite und/oder zur Maximalhöhe skaliert werden kann, ohne die Bildqualität zu beeinträchtigen. Beispielsweise beträgt eine Maximalbreite 300 cm und/oder eine Maximalhöhe 150 cm.

Wenn entweder die Substratbreite größer als die Maximalbreite ist oder die Substrathöhe größer als die Maximalhöhe ist, kann das automatische Anpassen die folgenden Schritte umfassen: Skalieren des Bildes auf die kleinstmögliche Größe, bei der die skalierte Bildbreite mindestens so groß ist wie die Substratbreite oder die skalierte Bildhöhe mindestens so groß ist wie die Substrathöhe, und KI-gestütztes Erweitern des skalierten Bildes entlang der Bildbreite oder entlang der Bildhöhe und/oder mehrfaches Anordnen des skalierten Bildes entlang der Bildbreite oder entlang der Bildhöhe aufeinanderfolgend und jeweils an den Kanten aneinandergrenzender Bilder gespiegelt, sodass eine Gesamtbreite des skalierten und erweiterten und/oder angeordneten Bildes mindestens so groß ist wie die Substratbreite und eine Gesamthöhe des skalierten und erweiterten und/oder angeordneten Bildes zusammen mindestens so groß ist wie die Substrathöhe. Wenn das Substrat entlang einer ersten Achse (Breite oder Höhe) zu groß ist, wird das Bild also erst so skaliert, dass das skalierte Bild entlang der zweiten Achse (Höhe oder Breite) das gesamte Substrat überdeckt und dann entlang der ersten Achse KI-gestützt so erweitert und/oder so oft entlang der ersten Achse gespiegelt nebeneinander angeordnet, dass das skalierte und erweiterte und/oder angeordnete Bild entlang beider Achsen das gesamte Substrat überdeckt.

KI wird im Sinne der Erfindung als Abkürzung für künstliche Intelligenz verwendet. Das KI-gestützte Erweitern umfasst vorzugsweise eine automatische Bildgenerierung ohne Nutzereingabe: Das KI-gestützte Erweitern umfasst vorzugsweise eine automatische Aktivierung KI-gestützter Bildmodelle, um das Bild entlang der Bildbreite und/ oder entlang der Bildhöhe zu erweitern. Das KI-gestützte Erweitern basiert vorzugsweise auf einer intelligenten Analyse und Reproduktion der bestehenden Bildinhalte des Bildes, um eine realitätstreue, konsistente und ästhetisch ansprechende Darstellung über das gesamte Substrat zu gewährleisten, ohne dass eine direkte Anweisung oder ein spezifischer Input durch den Nutzer erforderlich ist. Zusätzlich kann das Verfahren für Nutzer die Möglichkeit bieten, durch spezifische Nutzereingaben die Gestaltung des Substrats direkt zu beeinflussen. Diese Eingaben dienen als kreative Vorgaben für die KI, die daraufhin vorzugsweise maßgeschneiderte visuelle Inhalte generiert oder bestehende Bilder modifiziert, um individuellen Vorstellungen und Anforderungen gerecht zu werden.

"Mindestens so groß wie" bedeutet im Sinne der Erfindung vorzugsweise "um eine Randbreite größer", wobei die Randbreite vorzugsweise von 0 % bis 20 %, besonders bevorzugt 10 %, der Substratbreite oder der Substrathöhe beträgt. Die Randbreite definiert eine Breite eines Randes des angepassten Bildes, der nicht auf das Substrat gedruckt wird, und ermöglicht eine Auswahl eines Bildausschnitts aus dem angepassten Bild zum Aufbringen auf das Substrat.

Wenn die Substratbreite größer als die Maximalbreite ist und die Substrathöhe größer als die Maximalhöhe ist, kann das automatische Anpassen die folgenden Schritte umfassen: Skalieren des Bildes, sodass die skalierte Bildbreite mindestens so groß ist wie die Maximalbreite und die skalierte Bildhöhe mindestens so groß ist wie die Maximalhöhe, und KI-gestütztes Erweitern des skalierten Bildes entlang der Bildbreite und entlang der Bildhöhe und/oder jeweils mehrfaches Anordnen des skalierten Bildes entlang der Bildbreite und entlang der Bildhöhe aufeinanderfolgend und jeweils an den Kanten aneinandergrenzender Bilder gespiegelt, sodass eine Gesamtbreite des skalierten und erweiterten und/oder angeordneten Bildes mindestens so groß ist wie die Substratbreite und eine Gesamthöhe des skalierten und erweiterten und/oder angeordneten Bildes zusammen mindestens so groß ist wie die Substrathöhe. Wenn das Substrat entlang beider Achsen zu groß ist, wird es also zuerst auf seine maximale Größe skaliert und dann entlang beider Achsen KI-gestützt so erweitert und/oder entlang beider Achsen jeweils so oft gespiegelt nebeneinander angeordnet, dass das skalierte und erweiterte und/oder angeordnete Bild entlang beider Achsen das gesamte Substrat überdeckt.

Das Substrat ist vorzugsweise aus mehreren, insbesondere rechteckigen, Platten zusammengesetzt, wobei das Ermitteln der Substratbreite und der Substrathöhe folgende Schritte umfasst: Eingeben jeweils einer Plattenbreite und einer Plattenhöhe der Platten und einer Plattenanordnung der Platten relativ zueinander zu dem Substrat; automatisches Berechnen der Substratbreite und der Substrathöhe aus den Plattenmaßen und aus der Plattenanordnung.

Das Verfahren umfasst vorzugsweise die folgenden Schritte nach dem Anpassen und vor dem Aufbringen: Anzeigen eines auf das Substrat aufzubringenden Bildausschnitts des angepassten Bildes; und Positionieren des Bildausschnitts innerhalb des angepassten Bildes.

Das Anzeigen des Bildausschnitts umfasst vorzugsweise ein automatisches Zentrieren des Bildausschnitts innerhalb des angepassten Bildes; und/oder erfolgt in einer Vollbilddarstellung.

Das Verfahren umfasst vorzugsweise die folgenden Schritte: Markieren von Ausschnittspositionen für in dem Substrat zu erzeugende Ausschnitte, insbesondere für Steckdosen oder für Schalter; automatisches Prüfen der Ausschnittspositionen; automatisches Verwerfen der Ausschnittspositionen bei einem negativem Prüfergebnis des automatischen Prüfens; und automatisches Herstellen der Ausschnitte an den Ausschnittspositionen bei einem positiven Prüfergebnis des automatischen Prüfens.

Das automatische Prüfen umfasst vorzugsweise ein automatisches Prüfen, ob die Ausschnitte an den markierten Ausschnittspositionen einen vordefinierten Mindestabstand von den Rändern des Substrats und/oder der Platten einhalten, der beispielsweise notwendig ist, um eine mechanische Stabilität des Substrats und/oder der Platten zu gewährleisten.

Das automatische Prüfen umfasst vorzugsweise ein automatisches Prüfen, ob die Ausschnitte an den markierten Ausschnittspositionen einen vordefinierten Mindestabstand voneinander einhalten.

Das automatische Prüfen umfasst vorzugsweise ein automatisches Prüfen, ob die markierten Ausschnittspositionen eine vordefinierte Maximalanzahl von Ausschnittspositionen überschreiten.

Das automatische Prüfen umfasst vorzugsweise ein automatisches Prüfen, ob die markierten Ausschnittspositionen einschlägigen Normen zur Positionierung von Steckdosen oder Schaltern genügen.

Das erfindungsgemäße Computersystem ist konfiguriert zur Ausführung des computerimplementierten Verfahrens, das Computersystem umfassend ein Computergerät konfiguriert zum Auswählen des Bildes; zum Ermitteln einer Substratbreite und einer Substrathöhe des Substrats; und zum automatischen Anpassen des Bildes, sodass das angepasste Bild das Substrat mindestens vollständig überdeckt; und ein Aufbringgerät konfiguriert zum automatischen Aufbringen des angepassten Bildes auf das Substrat.

Das erfindungsgemäße Computerprogramm umfasst Befehle, die ein Computersystem bei der Ausführung des Computerprogramms dazu veranlassen, das computerimplementierte Verfahren auszuführen.

### Beispiele

Das Verfahren, der zugehörige Algorithmus und der dadurch realisierte Konfigurator dienen vorzugsweise zur Konfiguration von Wandverkleidungen und Rückwänden aller Art, wie zum Beispiel Küchenrückwänden, Duschrückwänden und Spritzschutzen. Es ermöglicht eine präzise Bildverarbeitung nach individuellem Kundenwunsch, um Bilder ohne Qualitätsverlust auf unendlich viele Rückwände mit unterschiedlichen Größen anzupassen. Die Technik der Skalierung und Spiegelung passt Bilder an die Maße der Rückwände an und sorgt für eine perfekte Darstellung. Im Folgenden gehen wir auf Details beispielhafter Ausgestaltungen der Erfindung ein und berufen uns bei der Erklärung des Algorithmus auf das beispielhafte Maximalmaß 300 cm Breite und 150 cm Höhe. Die maximalen Maße der Rückwand, sind durch produktionsbedingte Einschränkungen, je nach Produktkategorie, vorgegeben. Der Algorithmus ist jedoch vorzugsweise so konzipiert, dass diese Werte flexibel angepasst werden können, um den Anforderungen verschiedener Produktionsumgebungen gerecht zu werden. Wir orientieren uns zum besseren Verständnis auf die Beispielwerte 300 cm x 150 cm.

Die vorliegende Erfindung beinhaltet einen Algorithmus, der Bilder beispielsweise bis zu einer maximalen Breite von 300 cm und Höhe von 150 cm skalieren kann, ohne dabei die Bildqualität zu beeinträchtigen. Dies löst das Problem der Qualitätsminderung bei großflächigen Rückwänden. Bei der Zusammenfügung mehrerer Rückwände führt der Algorithmus vorzugsweise abhängig von den Maßen der Rückwand eine Bildspiegelung und Bildskalierung durch, sobald die Gesamtbreite von beispielsweise 300 cm überschritten wird. Dieses Vorgehen gewährleistet eine nahtlose Integration mehrerer Rückwände, ohne sichtbare Qualitätsminderungen oder Diskontinuitäten.

Wenn die Gesamtbreite der Rückwände beispielsweise 300 cm nicht übersteigt, ist keine Bildspiegelung erforderlich. Das Gesamtbild wird entsprechend der kombinierten Breite skaliert. Übersteigt die Gesamtbreite beispielsweise 300 cm, erfolgt eine automatische Spiegelung, um eine durchgängige und ansprechende Darstellung zu erreichen.

In dem Algorithmus ist vorzugsweise die Flexibilität integriert, die Spiegelungsfunktion je nach Bedarf zu konfigurieren. Dies ermöglicht es, zu entscheiden (z.B. in einer Konfigurationsdatei), ob eine Spiegelung nur in der Höhe, nur in der Breite, oder in beiden Richtungen angewendet werden soll. Diese Anpassungsoption ist besonders nützlich, um bei Überschreitung der maximalen Gesamtbreite oder Gesamthöhe eine nahtlose und ästhetische Darstellung der Rückwände zu gewährleisten.

Dem Nutzer wird vorzugsweise in einem Konfigurator angezeigt, wo der Bildausschnitt zum Aufbringen auf das Substrat erfolgen wird. Es besteht vorzugsweise die Möglichkeit, den Bildbereich auszuwählen, der für die Rückwand verwendet wird. Der Algorithmus ermöglicht es dem Kunden, den Ausschnitt nach Wunsch anzupassen. Kunden können den gewünschten Bereich des Bildes für die Rückwand auswählen und so Einfluss auf das Endergebnis nehmen, was eine personalisierte Gestaltung ermöglicht.

Der Algorithmus vergleicht vorzugsweise das Verhältnis von Breite zu Höhe der Nutzereingabe mit dem des Originalbildes. Ist der Spielraum für die Anpassung des Ausschnittbereichs gering, wird das Bild vorzugsweise entsprechend den Voreinstellungen in einer Konfigurationsdatei entweder nach oben oder nach rechts gespiegelt. Der Begriff "gering" bezieht sich auf eine flexible Schwelle, die beispielsweise so eingestellt ist, dass mindestens 10 % des Gesamtbildes in Breite und Höhe für die Anpassung des Ausschnittbereichs zur Verfügung stehen. Diese Schwelle kann jedoch individuell angepasst werden, um unterschiedlichen Gestaltungsanforderungen gerecht zu werden.

Der Algorithmus überprüft vorzugsweise, wie das Verhältnis von Breite zu Höhe bei dem Bild, das der Kunde auswählt, im Vergleich zu den von ihm gewünschten Maßen des Substrats steht. Wenn diese Verhältnisse keine große Differenz (kann dynamisch angepasst werden) haben, hat der Kunde nur sehr eingeschränkte Möglichkeiten, seinen Bildbereich nach seinen Wünschen anzupassen. Um ihm mehr Möglichkeiten zu geben, erkennt der Algorithmus vorzugsweise automatisch anhand von den dynamisch festgelegten Differenzwerten, wann er das Bild zu spiegeln hat. Selbst wenn die Verhältnisse gleich sind, spiegelt der Algorithmus das Bild vorzugsweise, damit der Kunde bei der Auswahl des Ausschnitts mehr Freiheit und Flexibilität hat.

Die Festlegung der Differenzwerte erfolgt beispielsweise über eine Konfigurationsdatei im JSON-Format, die es ermöglicht, die Parameter des Algorithmus flexibel anzupassen. Dadurch können Benutzer die Toleranzwerte für die Bildanpassung je nach ihren Bedürfnissen und den spezifischen Anforderungen der Bildkomposition einstellen.

Nach Hinzufügung einer zweiten Rückwand wird der Ausschnittbereich vorzugsweise automatisch zentriert. Diese Zentrierung erfolgt vorzugsweise unabhängig davon, ob ein zweites Bild hinzugefügt oder gespiegelt wird oder ob das Originalbild lediglich skaliert wird.

Der Konfigurator ermöglicht den Nutzern vorzugsweise eine umfassende Vollbildvorschau der konfigurierten Rückwand. Diese Funktion bietet eine realistische und detailgetreue Darstellung des Endprodukts, was die Entscheidungsfindung und Zufriedenheit der Kunden verbessert.

Die vorliegende Erfindung integriert vorzugsweise eine fortschrittliche Funktion zur automatischen Überprüfung und Anpassung von Steckdosenausschnitten, die eine erhebliche Innovation im Bereich der Rückwandkonfiguration darstellt. Diese Funktion bietet eine umfassende Lösung, die sowohl die Produktionseffizienz als auch die Designflexibilität für den Endkunden erheblich verbessert.

Der Algorithmus führt vorzugsweise eine automatische Überprüfung der Stegmaße für Steckdosenausschnitte durch. Diese Innovation eliminiert die Notwendigkeit für manuelle Überprüfungen und minimiert somit nicht nur das Risiko von Produktionsfehlern, sondern sorgt auch für effizientere Prozesse, da unnötiges Hin und Her zwischen Händler und Produzent vermieden wird. Dies gewährleistet, dass alle Steckdosenausschnitte exakt den technischen Spezifikationen entsprechen und produktionsfertige Konfigurationen ohne manuellen Eingriff ermöglicht werden.

Der Algorithmus berücksichtigt vorzugsweise produktionsbedingte Einschränkungen bei der Festlegung der Abstände zwischen den einzelnen Steckdosen und zwischen Steckdosenpaaren. Dies gewährleistet, dass die endgültigen Produkte nicht nur ästhetisch ansprechend, sondern auch technisch machbar sind.

Das Verfahren ermöglicht vorzugsweise eine komplette dynamische Konfiguration, indem alle spezifischen produktionsbedingten Anforderungen oder Einschränkungen, über die standardmäßig vorgegebenen Werte hinaus, individuell in einer Konfigurationsdatei angepasst werden können. Diese Anpassungsfähigkeit erweitert signifikant die operative Flexibilität des Algorithmus, indem sie es ermöglicht, den Produktionsprozess präzise auf die spezifischen Bedürfnisse und Rahmenbedingungen abzustimmen.

Die maximale Anzahl von Steckdosen und Steckdosenpaaren wird vorzugsweise entsprechend der Größe der Rückwand und spezifischen produktionsbedingten Anforderungen berechnet. Der Konfigurator berücksichtigt diese Faktoren dynamisch, um eine optimale Anordnung und Anzahl der Steckdosen zu gewährleisten.

Der Konfigurator kombiniert vorzugsweise die produktionstechnischen Anforderungen mit der Gestaltungsfreiheit des Kunden. Durch die dynamische Anpassung der Konfiguration an die Produktionsmöglichkeiten wird sichergestellt, dass jeder Entwurf realisierbar ist, ohne dabei Kompromisse bei der persönlichen Note einzugehen.

Der Algorithmus ist vorzugsweise in der Lage, eine Mindestgröße für Platten zu definieren, die für Steckdosenausschnitte geeignet sind, und passt diese Ausschnitte dynamisch an eine Vielzahl von Steckdosengrößen an. Diese Anpassungsfähigkeit berücksichtigt internationale Standards und spezifische Anforderungen verschiedener Länder, nicht nur der Schweiz und Deutschlands, sondern auch anderer globaler Standards. Beispielsweise durch die Einbindung einer Konfigurationsdatei im JSON-Format können diese Standards individuell angepasst und erweitert werden, um den sich ändernden Bedürfnissen und lokalen Vorschriften gerecht zu werden. Diese Flexibilität ermöglicht es Kunden, Produkte zu entwerfen, die präzise ihren spezifischen Bedürfnissen und den Anforderungen ihrer lokalen Umgebung entsprechen.

Neben standardisierten Bohrungen für Steckdosen bietet der Konfigurator vorzugsweise die Möglichkeit, individuelle Durchmesser für Bohrungen anzupassen. Kunden können somit maßgeschneiderte Lösungen für ihre spezifischen Anforderungen erstellen, was die Personalisierung des Endprodukts weiter vorantreibt.

Durch die Integration dieser Funktionen in den Konfigurator setzen wir neue Maßstäbe in der individuellen Gestaltung von Rückwänden, indem wir sowohl die technischen Anforderungen der Produktion als auch die gestalterischen Wünsche der Kunden nahtlos miteinander verbinden.

Der Algorithmus gewährleistet durch innovative Berechnungsmethoden die Beibehaltung einer hochauflösenden Bildqualität selbst bei großformatigen Rückwänden. Marktübliche Konfiguratoren geben unscharfe Bilder als Ergebnis aus.

Durch die intelligente Spiegelung wird eine durchgehend nahtlose Optik über unendlich viele Rückwände hinweg sichergestellt, was ein einzigartiges visuelles Erlebnis im entsprechenden Wohnbereich für den Kunden schafft.

Kunden können den Bildausschnitt individuell wählen und anpassen, wodurch ein hohes Maß an Personalisierung des Endprodukts ermöglicht wird.

Der Algorithmus bietet durch die Skalierungs- und Spiegelungsfunktion eine erhöhte Flexibilität bei der Bildanpassung.

Die automatische Zentrierung und eine einfache Nutzeroberfläche des Konfigurators erleichtern die Handhabung und machen die Gestaltung auch für nicht-technische Nutzer zugänglich.

Durch die Optimierung des Konfigurationsprozesses werden Zeit und Ressourcen gespart, sowohl für den Kunden als auch für den Produzenten.

Andere Verfahren für mehrteilige Rückwände erlauben meist nur die Konfiguration von maximal drei Teilen. Diese werden immer nur skaliert, was oft zu einem Verlust der Bildqualität führt. Unser Ansatz ist anders: Bei der Überschreitung des Maxialmaßes wird das Bild nicht weiter skaliert, sondern gespiegelt. Das bietet unseren Kunden mehr Auswahl für ein individuelles Design, ohne Einbußen bei der Qualität.

Der hier beschriebene Algorithmus repräsentiert eine wegweisende technische Lösung für die Konfiguration von Rückwänden, die sich durch intuitive Bedienbarkeit, Qualitätsbewahrung und innovative Anpassungsfähigkeit auszeichnet. Die Erfindung ist insbesondere für den Einsatz in Online-Konfiguratoren zur Individualisierung von Rückwänden und anderen großformatigen Wandverkleidungen prädestiniert und trägt dazu bei, den Design- und Produktionsprozess zu revolutionieren.

Die vorliegende Erfindung umfasst vorzugsweise die Implementierung und Anwendung von künstlicher Intelligenz (KI) in der Verarbeitung und Anpassung visueller Inhalte für Rückwände, speziell durch die Nutzung fortschrittlicher Bildmodelle. Diese Innovation ermöglicht eine signifikante Erweiterung der Gestaltungsmöglichkeiten und adressiert spezifische Herausforderungen bei der Anpassung und Erweiterung von Bildinhalten auf großformatigen Oberflächen.

Eine Innovation von Ausgestaltungen der Erfindung liegt in der Dualität der Anwendungsmöglichkeiten der KI-gestützten Bildmodelle: automatische Bildgenerierung ohne Nutzereingabe und gezielte Bildanpassung durch spezifische Nutzereingabe.

Bei der automatischen Bildgenerierung ohne Nutzereingabe aktiviert der Algorithmus vorzugsweise selbstständig KI-gestützte Bildmodelle, um das Design der Rückwand horizontal und/ oder vertikal zu erweitern und/oder aufzufüllen, sobald erkannt wird, dass Bildabmessungen und die geplanten Rückwand-Abmessungen nicht übereinstimmen. Diese automatische Erweiterung basiert vorzugsweise auf einer intelligenten Analyse und Reproduktion der bestehenden Bildinhalte, um eine konsistente und ästhetisch ansprechende Darstellung über die gesamte Rückwand zu gewährleisten, ohne dass eine direkte Anweisung oder ein spezifischer Input durch den Nutzer erforderlich ist.

Bei der gezielten Bildanpassung durch spezifische Nutzereingabe bietet die Erfindung vorzugsweise zusätzlich zur automatischen Erweiterung die Möglichkeit für Nutzer, durch spezifische Nutzereingaben die Gestaltung der Rückwand direkt zu beeinflussen. Diese Eingaben dienen als kreative Vorgaben für die KI, die daraufhin vorzugsweise maßgeschneiderte visuelle Inhalte generiert oder bestehende Bilder modifiziert, um individuellen Vorstellungen und Anforderungen gerecht zu werden.

Die Integration von KI-Bildmodellen zur automatischen und durch spezifische Nutzer-Eingabe gesteuerten Bildanpassung bietet eine Reihe von signifikanten Vorteilen und adressiert bestehende Herausforderungen in der Rückwandgestaltung:

Durch KI-gestützte Bildmodelle werden die kreativen Grenzen erweitert, indem Nutzern die Freiheit gegeben wird, persönliche und einzigartige Designs zu realisieren.

Die automatische Anpassung von Bildinhalten reduziert den Aufwand und das Risiko manueller Fehler, indem sie konsistente Qualität über alle Bildbereiche hinweg sicherstellt.

Die Möglichkeit, spezifische Nutzer-Eingaben einzugeben, erlaubt eine direkte und präzise Umsetzung individueller Designvorstellungen.

Die KI-gestützte Erweiterung adressiert das Problem der Bilddegradation bei der Anpassung an großformatige Flächen, indem sie eine hochwertige Bildqualität über die gesamte Rückwandfläche hinweg gewährleistet.

Die vorliegende Erfindung stellt einen bedeutenden Fortschritt in der Technologie der Rückwandgestaltung dar, indem sie eine flexible, nutzerorientierte und qualitativ hochwertige Lösung für die Anpassung und Erweiterung von Bildinhalten mittels künstlicher Intelligenz bietet.

## Patentansprüche

1. Computerimplementiertes Verfahren zum Aufbringen eines Bildes auf ein Substrat, das Verfahren umfassend folgende Schritte:
a. Auswählen des Bildes;
b. Ermitteln einer Substratbreite und einer Substrathöhe des Substrats;
c. automatisches Anpassen des Bildes, sodass das angepasste Bild das Substrat mindestens vollständig überdeckt; und
d. automatisches Aufbringen, insbesondere Drucken, des angepassten Bildes auf das Substrat,
**dadurch gekennzeichnet, dass** das automatische Anpassen folgende Schritte umfasst:
e. automatisches Erkennen mindestens eines Objekts in dem Bild;
f. automatisches Entscheiden anhand vordefinierter Regeln und/oder durch einen lernfähigen Algorithmus, und abhängig von Eigenschaften des mindestens einen Objekts, ob das mindestens eine Objekt vergrößert wird
i. durch ein Skalieren des mindestens einen Objektes,
ii. durch ein mehrfaches Anordnen des mindestens einen Objektes aufeinanderfolgend und jeweils an den Kanten aneinandergrenzender Objekte gespiegelt, und/oder
iii. durch ein KI-gestütztes Erweitern des mindestens einen Objektes; und
g. automatisches Vergrößern des Bildes zumindest auf die Größe des Substrats, wobei das mindestens eine Objekt gemäß dem Ergebnis des Entscheidens vergrößert wird.

2. Computerimplementiertes Verfahren nach Anspruch 1,
a. wobei das automatische Erkennen des mindestens einen Objekts in dem Bild ein automatisches Erkennen mehrerer Objekte in dem Bild umfasst;
b. wobei das automatische Entscheiden, wie die Objekte vergrößert werden, und das automatische Vergrößern der Objekte gemäß dem Ergebnis des Entscheidens für die Objekte voneinander unabhängig erfolgen.

3. Computerimplementiertes Verfahren nach Anspruch 1 oder 2, wobei das automatische Erkennen des mindestens einen Objekts durch maschinelles Sehen, Computer Vision und/oder Deep Learning erfolgt, wobei das automatische Erkennen bevorzugt mehrere Computational Neural Networks verwendet, um Merkmale zur Erkennung des Objekts auf verschiedenen Ebenen einer Bildhierarchie des Bildes zu extrahieren.

4. Computerimplementiertes Verfahren nach einem der Ansprüche 1 bis 3, wobei das automatische Anpassen ein automatisches Bestimmen eines Kontextes des mindestens einen Objekts umfasst, wobei das automatische Entscheiden den Kontext einbezieht; wobei der Kontext bevorzugt eine räumliche Beziehung und/oder eine funktionale Bedeutung des mindestens einen Objekts in dem Bild umfasst; und/oder wobei das Bestimmen des Kontextes bevorzugt durch einen Algorithmus zur Mustererkennung und/oder durch eine semantische Analyse erfolgt.

5. Computerimplementiertes Verfahren nach einem der Ansprüche 1 bis 4, wobei das KI-gestützte Erweitern ein Analysieren und Erweitern des Objektes durch ein tiefes neuronales Netzwerk, das bevorzugt Generative Adversarial Networks nutzt, umfasst.

6. Computerimplementiertes Verfahren nach einem der Ansprüche 1 bis 5, wobei das automatische Anpassen ein automatisches Feststellen eines Blickwinkels des Bildes umfasst, wobei das automatische Entscheiden den Blickwinkel einbezieht.

7. Computerimplementiertes Verfahren nach einem der Ansprüche 1 bis 6,
a. wobei das automatische Anpassen den folgenden Schritt umfasst, wenn die Substratbreite kleiner oder gleich einer vordefinierten Maximalbreite ist und die Substrathöhe kleiner oder gleich einer vordefinierten Maximalhöhe ist:
i. Skalieren des Bildes auf eine Größe, bevorzugt auf die kleinstmögliche Größe, bei der eine skalierte Bildbreite mindestens so groß ist wie die Substratbreite und eine skalierte Bildhöhe mindestens so groß ist wie die Substrathöhe;
b. und wobei das automatische Anpassen die folgenden Schritte umfasst, wenn entweder die Substratbreite größer als die Maximalbreite ist oder die Substrathöhe größer als die Maximalhöhe ist:
i. Skalieren des Bildes auf die kleinstmögliche Größe, bei der die skalierte Bildbreite mindestens so groß ist wie die Substratbreite oder die skalierte Bildhöhe mindestens so groß ist wie die Substrathöhe, und
ii. entlang der Bildbreite oder entlang der Bildhöhe KI-gestütztes Erweitern des skalierten Bildes und/oder mehrfaches Anordnen des skalierten Bildes aufeinanderfolgend und jeweils an den Kanten aneinandergrenzender Bilder gespiegelt, sodass eine Gesamtbreite des skalierten und erweiterten und/oder angeordneten Bildes mindestens so groß ist wie die Substratbreite und eine Gesamthöhe des skalierten und erweiterten und/oder angeordneten Bildes mindestens so groß ist wie die Substrathöhe;
c. und wobei das automatische Anpassen die folgenden Schritte umfasst, wenn die Substratbreite größer als die Maximalbreite ist und die Substrathöhe größer als die Maximalhöhe ist:
i. Skalieren des Bildes, sodass die skalierte Bildbreite mindestens so groß ist wie die Maximalbreite und die skalierte Bildhöhe mindestens so groß ist wie die Maximalhöhe, und
ii. entlang der Bildbreite und entlang der Bildhöhe jeweils KI-gestütztes Erweitern des Bildes und/oder mehrfaches Anordnen des skalierten Bildes aufeinanderfolgend und jeweils an den Kanten aneinandergrenzender Bilder gespiegelt, sodass eine Gesamtbreite des skalierten und erweiterten und/oder angeordneten Bildes mindestens so groß ist wie die Substratbreite und eine Gesamthöhe des skalierten und erweiterten und/oder angeordneten Bildes mindestens so groß ist wie die Substrathöhe.

8. Computerimplementiertes Verfahren nach einem der Ansprüche 1 bis 7, wobei das Substrat aus mehreren, insbesondere rechteckigen, Platten zusammengesetzt ist, wobei das Ermitteln der Substratbreite und der Substrathöhe folgende Schritte umfasst:
a. Eingeben jeweils einer Plattenbreite und einer Plattenhöhe der Platten und einer Plattenanordnung der Platten relativ zueinander zu dem Substrat;
b. automatisches Berechnen der Substratbreite und der Substrathöhe aus den Plattenmaßen und aus der Plattenanordnung.

9. Computerimplementiertes Verfahren nach einem der Ansprüche 1 bis 8, umfassend die folgenden Schritte nach dem Anpassen und vor dem Aufbringen:
a. Anzeigen eines auf das Substrat aufzubringenden Bildausschnitts des angepassten Bildes; und
b. Positionieren des Bildausschnitts innerhalb des angepassten Bildes,

10. Computerimplementiertes Verfahren nach Anspruch 9,
wobei das Anzeigen des Bildausschnitts ein automatisches Zentrieren des Bildausschnitts innerhalb des angepassten Bildes umfasst.

11. Computerimplementiertes Verfahren nach einem der Ansprüche 1 bis 10, umfassend die folgenden Schritte:
a. Markieren von Ausschnittspositionen für in dem Substrat zu erzeugende Ausschnitte, insbesondere für Steckdosen oder für Schalter;
b. automatisches Prüfen der Ausschnittspositionen;
c. automatisches Verwerfen der Ausschnittspositionen bei einem negativem Prüfergebnis des automatischen Prüfens; und
d. automatisches Herstellen der Ausschnitte an den Ausschnittspositionen bei einem positiven Prüfergebnis des automatischen Prüfens.

12. Computerimplementiertes Verfahren nach Anspruch 11,
wobei das automatische Prüfen
a. ein automatisches Prüfen umfasst, ob die Ausschnitte an den markierten Ausschnittspositionen einen vordefinierten Mindestabstand von den Rändern des Substrats und/oder der Platten einhalten;
b. ein automatisches Prüfen umfasst, ob die Ausschnitte an den markierten Ausschnittspositionen einen vordefinierten Mindestabstand voneinander einhalten;
c. ein automatisches Prüfen umfasst, ob die markierten Ausschnittspositionen eine vordefinierte Maximalanzahl von Ausschnittspositionen überschreiten; und/oder
d. ein automatisches Prüfen umfasst, ob die markierten Ausschnittspositionen einschlägigen Normen zur Positionierung von Steckdosen oder Schaltern genügen.

13. Computersystem konfiguriert zur Ausführung eines computerimplementierten Verfahrens nach einem der Ansprüche 1 bis 12, das Computersystem umfassend
a. ein Computergerät konfiguriert
i. zum Auswählen des Bildes;
ii. zum Ermitteln einer Substratbreite und einer Substrathöhe des Substrats; und
iii. zum automatischen Anpassen des Bildes, sodass das angepasste Bild das Substrat mindestens vollständig überdeckt; und
b. ein Aufbringgerät konfiguriert zum automatischen Aufbringen des angepassten Bildes auf das Substrat.

14. Computerprogramm umfassend Befehle, die ein Computersystem bei der Ausführung des Computerprogramms dazu veranlassen, ein computerimplementiertes Verfahren nach einem der Ansprüche 1 bis 12 auszuführen.

## Claims

1. A computer-implemented method for applying an image to a substrate, the method comprising the following steps:
a. selecting the image;
b. determining a substrate width and a substrate height of the substrate;
c. automatically adjusting the image so that the adjusted image at least completely covers the substrate; and
d. automatically applying, in particular by printing, the adjusted image onto the substrate,
**characterised in that** the automatic adjustment comprises the following steps:
e. automatically detecting at least one object in the image;
f. automatically determining, on the basis of predefined rules and/or by means of a machine-learning algorithm, and depending on the properties of the at least one object, whether the at least one object is to be enlarged
i. by scaling the at least one object,
ii. by arranging the at least one object multiple times in succession, each instance mirrored at the edges of adjacent objects, and/or
iii. by AI-assisted extension of the at least one object; and
g. automatically enlarging the image to at least the size of the substrate, wherein the at least one object is enlarged in accordance with the result of the automatic determination.

2. The computer-implemented method according to claim 1,
a. wherein the automatic detection of the at least one object in the image comprises an automatic detection of multiple objects in the image;
b. wherein the automatic determination of how the objects are to be enlarged and the automatic enlargement of the objects in accordance with the result of the determination are carried out independently of one another for each object.

3. The computer-implemented method according to claim 1 or 2,
wherein the automatic detection of the at least one object is carried out by machine vision, computer vision and/or deep learning, wherein the automatic detection preferably uses multiple computational neural networks to extract features for detecting the object at different levels of an image hierarchy of the image.

4. The computer-implemented method according to any one of claims 1 to 3, wherein the automatic adjustment comprises automatically determining a context of the at least one object, wherein the automatic determination takes the context into account; wherein the context preferably comprises a spatial relationship and/or a functional significance of the at least one object in the image; and/or wherein the determination of the context is preferably carried out by a pattern recognition algorithm and/or by a semantic analysis.

5. The computer-implemented method according to any one of claims 1 to 4, wherein the AI-assisted extension comprises analysing and extending the object by means of a deep neural network, which preferably utilises generative adversarial networks.

6. The computer-implemented method according to any one of claims 1 to 5, wherein the automatic adjustment comprises automatically determining a viewing angle of the image, wherein the automatic determination takes the viewing angle into account.

7. The computer-implemented method according to any one of claims 1 to 6,
a. wherein the automatic adjustment comprises the following step if the substrate width is less than or equal to a predefined maximum width and the substrate height is less than or equal to a predefined maximum height:
i. scaling the image to a size, preferably the smallest possible size, such that a scaled image width is at least as large as the substrate width and a scaled image height is at least as large as the substrate height;
b. and wherein the automatic adjustment comprises the following steps if either the substrate width is greater than the maximum width or the substrate height is greater than the maximum height:
i. scaling the image to the smallest possible size such that the scaled image width is at least as large as the substrate width or the scaled image height is at least as large as the substrate height, and
ii. AI-assisted expansion of the scaled image and/or multiple arrangement of the scaled image in succession, with each image mirrored at the edges of adjacent images, along the image width or along the image height, so that the total width of the scaled and extended and/or arranged image is at least as large as the substrate width and the total height of the scaled and extended and/or arranged image is at least as large as the substrate height;
c. and wherein the automatic adjustment comprises the following steps if the substrate width is greater than the maximum width and the substrate height is greater than the maximum height:
i. scaling the image so that the scaled image width is at least as large as the maximum width and the scaled image height is at least as large as the maximum height, and
ii. AI-assisted expansion of the image and/or the sequential arrangement of the scaled image in multiple instances, each mirrored at the edges of adjacent images, along its width and height so that the total width of the scaled and extended and/or arranged image is at least as great as the substrate width, and the total height of the scaled and extended and/or arranged image is at least as great as the substrate height.

8. The computer-implemented method according to any one of claims 1 to 7, wherein the substrate is composed of a plurality of, in particular rectangular, plates, wherein the determination of the substrate width and the substrate height comprises the following steps:
a. inputting a plate width and a plate height for each plate and a plate arrangement of the plates relative to one another to form the substrate;
b. automatically calculating the substrate width and the substrate height from the plate dimensions and the plate arrangement.

9. The computer-implemented method according to any one of claims 1 to 8, comprising the following steps after the automatic adjustment and before the automatic application:
a. displaying an image section of the adjusted image to be applied to the substrate; and
b. positioning the image section within the adjusted image,

10. The computer-implemented method according to claim 9,
wherein displaying the image section comprises automatically centring the image section within the adjusted image.

11. The computer-implemented method according to any one of claims 1 to 10, comprising the following steps:
a. marking cut-out positions for cut-outs to be produced in the substrate, in particular for sockets or switches;
b. automatically checking the cut-out positions;
c. automatically rejecting the cut-out positions in the event of a negative result from the automatic checking; and
d. automatically producing the cut-outs at the cut-out positions if the result of the automatic checking is positive.

12. The computer-implemented method according to claim 11,
wherein the automatic checking comprises
a. automatically checking whether the cut-outs at the marked cut-out positions maintain a predefined minimum distance from the edges of the substrate and/or the plates;
b. automatically checking whether the cut-outs at the marked cut-out positions maintain a predefined minimum distance from one another;
c. automatically checking whether the marked cut-out positions exceed a predefined maximum number of cut-out positions; and/or
d. automatically checking whether the marked cut-out positions comply with relevant standards for the positioning of sockets or switches.

13. A computer system configured to carry out the computer-implemented method according to any one of claims 1 to 12, the computer system comprising
a. a computer device configured for
i. selecting the image;
ii. determining a substrate width and a substrate height of the substrate; and
iii. automatically adjusting the image so that the adjusted image at least completely covers the substrate; and
b. an application device configured for automatically applying the adjusted image to the substrate.

14. A computer programme comprising instructions which, when the computer programme is executed, cause a computer system to perform the computer-implemented method according to any one of claims 1 to 12.

## Revendications

1. Procédé assisté par ordinateur pour appliquer une image sur un substrat, le procédé comprenant les étapes suivantes :
a. sélectionner l'image ;
b. déterminer la largeur et de la hauteur du substrat ;
c. ajuster automatiquement l'image de telle sorte que l'image ajustée recouvre au moins entièrement le substrat ; et
d. appliquer automatiquement, notamment par impression, l'image ajustée sur le substrat,
**caractérisé en ce que** l'ajustement automatique comprend les étapes suivantes :
e. détecter automatiquement au moins un objet dans l'image ;
f. décider automatiquement, sur la base de règles prédéfinies et/ou à l'aide d'un algorithme capable d'apprentissage, et en fonction des propriétés dudit au moins un objet, si ledit au moins un objet doit être agrandi
i. par une mise à l'échelle dudit au moins un objet,
ii. par la disposition multiple dudit au moins un objet, successivement et en le reflétant à chaque fois au niveau des bords des objets adjacents, et/ou
iii. par une extension assistée par IA dudit au moins un objet; et
g. agrandir automatiquement l'image au moins jusqu'à la taille du substrat, ledit au moins un objet étant agrandi conformément au résultat de la décision automatique.

2. Procédé assisté par ordinateur selon la revendication 1,
a. la détection automatique dudit au moins un objet dans l'image comprenant une détection automatique de plusieurs objets dans l'image ;
b. la décision automatique comment les objets sont agrandis et l'agrandissement automatique des objets en fonction du résultat de la décision s'effectuant pour les objets indépendamment les uns des autres.

3. Procédé assisté par ordinateur selon la revendication 1 ou 2, la détection automatique dudit au moins un objet s'effectuant par vision artificielle, par vision par ordinateur et/ou par apprentissage profond, la détection automatique utilisant de préférence plusieurs réseaux neuronaux computationnels pour extraire des caractéristiques permettant la détection de l'objet à différents niveaux d'une hiérarchie d'images de ladite image.

4. Procédé assisté par ordinateur selon l'une des revendications 1 à 3, l'adaptation automatique comprenant une détermination automatique d'un contexte dudit au moins un objet, la décision automatique tenant compte dudit contexte ; ledit contexte comprenant de préférence une relation spatiale et/ou une signification fonctionnelle dudit au moins un objet dans l'image ; et/ou la détermination dudit contexte s'effectuant de préférence par un algorithme de reconnaissance de formes et/ou par une analyse sémantique.

5. Procédé assisté par ordinateur selon l'une des revendications 1 à 4, l'extension assistée par IA comprenant une analyse et une extension de l'objet par un réseau neuronal profond, utilisant de préférence des réseaux antagonistes génératifs.

6. Procédé assisté par ordinateur selon l'une des revendications 1 à 5, l'ajustement automatique comprenant une détermination automatique d'un angle de vue de l'image, la décision automatique tenant compte dudit angle de vue.

7. Procédé assisté par ordinateur selon l'une des revendications 1 à 6,
a. l'ajustement automatique comprenant l'étape suivante lorsque la largeur du substrat est inférieure ou égale à une largeur maximale prédéfinie et la hauteur du substrat est inférieure ou égale à une hauteur maximale prédéfinie :
i. mettre l'image à l'échelle à une taille, de préférence à la plus petite taille possible, pour laquelle une largeur de l'image mise à l'échelle est au moins aussi grande que la largeur du substrat et une hauteur de l'image mise à l'échelle est au moins aussi grande que la hauteur du substrat ;
b. et l'ajustement automatique comprenant les étapes suivantes lorsque soit la largeur du substrat est supérieure à la largeur maximale, soit la hauteur du substrat est supérieure à la hauteur maximale :
i. mettre l'image à l'échelle à la plus petite taille possible pour laquelle la largeur de l'image mise à l'échelle est au moins égale à la largeur du substrat ou la hauteur de l'image mise à l'échelle est au moins égale à la hauteur du substrat, et
ii. étendre l'image mise à l'échelle à l'aide d'IA et/ou disposer plusieurs fois l'image mise à l'échelle de manière successive, chacune étant inversée au niveau des bords des images adjacentes, le long de la largeur ou de la hauteur de l'image de sorte que la largeur totale de l'image mise à l'échelle et étendue et/ou disposée plusieurs fois soit au moins égale à la largeur du substrat et que la hauteur totale de l'image mise à l'échelle et étendue et/ou disposée plusieurs fois soit au moins égale à la hauteur du substrat ;
c. et l'ajustement automatique comprenant les étapes suivantes lorsque la largeur du substrat est supérieure à la largeur maximale et que la hauteur du substrat est supérieure à la hauteur maximale :
i. mettre l'image à l'échelle de telle sorte que la largeur de l'image mise à l'échelle soit au moins égale à la largeur maximale et que la hauteur de l'image mise à l'échelle soit au moins égale à la hauteur maximale, et
ii. étendre l'image mise à l'échelle à l'aide d'IA et/ou disposer plusieurs fois l'image mise à l'échelle de manière successive, chacune étant inversée au niveau des bords des images adjacentes, le long de la largeur et de la hauteur de l'image respectivement de sorte que la largeur totale de l'image mise à l'échelle et étendue et/ou disposée plusieurs fois soit au moins égale à la largeur du substrat et que la hauteur totale de l'image mise à l'échelle et étendue et/ou disposée plusieurs fois soit au moins égale à la hauteur du substrat.

8. Procédé assisté par ordinateur selon l'une des revendications 1 à 7, le substrat étant composé de plusieurs plaques, notamment rectangulaires, la détermination de la largeur et de la hauteur du substrat comprenant les étapes suivantes :
a. saisir respectivement une largeur et une hauteur de chaque plaque, ainsi qu'une disposition des plaques les unes par rapport aux autres pour former le substrat ;
b. calculer automatique la largeur et la hauteur du substrat à partir des dimensions des plaques et de leur disposition.

9. Procédé assisté par ordinateur selon l'une des revendications 1 à 8, comprenant les étapes suivantes après l'ajustement et avant l'application :
a. afficher un extrait de l'image ajustée devant être appliqué sur le substrat ; et
b. positionner l'extrait de l'image au sein de l'image ajustée,

10. Procédé assisté par ordinateur selon la revendication 9,
l'affichage de l'extrait de l'image comprenant un centrage automatique duit extrait de l'image au sein de l'image ajustée.

11. Procédé assisté par ordinateur selon l'une des revendications 1 à 10, comprenant les étapes suivantes :
a. marquer des positions de découpe à réaliser dans le substrat, en particulier pour des prises de courant ou pour des interrupteurs ;
b. vérifier automatiquement les positions de découpe ;
c. rejeter automatiquement les positions de découpe en cas de résultat négatif de la vérification automatique ; et
d. réaliser automatiquement les découpes aux positions de découpe en cas de résultat positif de la vérification automatique.

12. Procédé assisté par ordinateur selon la revendication 11,
la vérification automatique comprenant
a. une vérification automatique si les découpes aux positions de découpe marquées respectent une distance minimale prédéfinie par rapport aux bords du substrat et/ou des plaques ;
b. une vérification automatique si les découpes aux positions de découpe marquées respectent une distance minimale prédéfinie les unes par rapport aux autres ;
c. une vérification automatique si les positions de découpe marquées dépassent un nombre maximal prédéfini de positions de découpe ; et/ou
d. une vérification automatique si les positions de découpe marquées sont conformes aux normes applicables en matière de positionnement de prises de courant ou d'interrupteurs.

13. Système informatique configuré pour exécuter le procédé assisté par ordinateur selon l'une des revendications 1 à 12, ledit système informatique comprenant
a. un dispositif informatique configuré
i. pour sélectionner l'image ;
ii. pour déterminer une largeur et une hauteur du substrat ; et
iii. pour ajuster automatiquement l'image de telle sorte que l'image ajustée recouvre au moins entièrement le substrat ; et
b. un dispositif d'application configuré pour appliquer automatiquement l'image ajustée sur le substrat.

14. Programme informatique comprenant des instructions qui, lors de l'exécution du programme informatique, amènent un système informatique à mettre en œuvre le procédé assisté par ordinateur selon l'une des revendications 1 à 12.
